# EUROPÄISCHE PATENTANMELDUNG

(11) **EP 3 147 056 A1**
(43) Veröffentlichungstag der Anmeldung: **29.03.2017**
(21) Anmeldenummer: 15186462.6
(22) Anmeldetag: 23.09.2015
(51) Int. Cl.: B23B 51/00, B23P 9/02, C23C 4/02

(54) **WERKZEUG ZUM AUFRAUEN EINER BOHRLOCHOBERFLÄCHE**

(71) Anmelder: HILTI Aktiengesellschaft, 9494 Schaan (LI)
(72) Erfinder: Renner, Markus, 86438 Kissing (DE); Popp, Franz, 86807 Buchloe (DE); Lederle, Hans-Peter, 87471 Durach (DE); Strobel-Schmidt, Rainer, 86825 Bad Woerishofen (DE); Ostermeier, Peter, 86911 Diessen (DE)
(74) Vertreter: Hilti Aktiengesellschaft Corporate Intellectual Property

(57) **Zusammenfassung**

Die Erfindung betrifft ein Werkzeug zum Aufrauen einer Bohrlochoberfläche, mit einem Kopplungsabschnitt (12) zum Einspannen des Werkzeugs (10) in ein Bohrgerät und einem Werkzeugkopf (14) zur Bearbeitung der Bohrlochoberfläche, wobei der Werkzeugkopf (14) eine äußere Mantelfläche (16) aufweist, auf der Schneidmittel (18) angeordnet sind. Es wird in einfacher und kostengünstiger Weise das Aufrauen einer Bohrlochoberfläche dadurch ermöglicht, dass die äußere Mantelfläche (18) entlang einer Werkzeuglängsrichtung (a) eine Balligkeit aufweist. Weiter wird ein Verfahren zum Aufrauen einer Bohrlochoberfläche angegeben.

## Beschreibung

Die Erfindung betrifft ein Werkzeug zum Aufrauen einer Bohrlochoberfläche, mit einem Kopplungsabschnitt zum Einspannen des Werkzeugs in ein Bohrgerät und einem Werkzeugkopf zur Bearbeitung der Bohrlochoberfläche, wobei der Werkzeugkopf eine äußere Mantelfläche aufweist, auf der Schneidmittel angeordnet sind.

Zur Befestigung von Bauteilen an Untergründen ist es bekannt, profilierte Ankerstangen mittels einer chemischen Mörtelmasse in vorgefertigten Sacklochbohrungen des Untergrunds festzulegen. Die Sacklochbohrungen können mithilfe diamantbestückter Werkzeuge hergestellt werden. Die Bohrlochwand eines solchen Bohrlochs kann, abhängig von dem Material des Untergrunds, sehr glatt sein. Um auch hohe an der Ankerstange angreifende Zugkräfte zuverlässig auf den Untergrund zu übertragen, ist es von Vorteil, wenn die Mörtelmasse im ausgehärteten Zustand formschlüssig mit der Bohrlochwand zusammenwirkt. Dies kann dadurch erreicht werden, dass wenigstens ein Teil der Bohrlochwand aufgeraut bzw. mit einer Profilierung versehen wird.

Werkzeuge und Verfahren zum Aufrauen einer Bohrlochoberfläche der eingangs genannten Art dienen daher insbesondere dazu, die Tragfähigkeit von chemischen Mörtelmassen in diamantgebohrten Löchern zu erhöhen. Die vergleichsweise glatte innere Mantelfläche eines Bohrlochs wird dabei strukturiert und beispielsweise mit definierten Hinterschnitten versehen. Die DE 31 43 462 A1 und die DE 38 19 650 A1 beschreiben jeweils Werkzeuge, an deren Werkzeugschaft eine separate konische Anlagefläche vorgesehen ist, die es einem Anwender ermöglicht, der Werkzeugrotation manuell eine Taumelbewegung zu überlagern. Auf diese Weise wird der Werkzeugkopf in radialer Richtung ausgelenkt und dringt in die Bohrlochoberfläche ein.

Bei den vorbekannten Lösungen ist nachteilig, dass die Werkzeuge aufgrund der separat an dem Werkzeugschaft vorgesehenen Anlageflächen aufwändig herzustellen und damit teuer sind.

Vor diesem Hintergrund liegt der vorliegenden Erfindung die technische Problemstellung zugrunde, ein Werkzeug zum Aufrauen einer Bohrlochfläche anzugeben, welche die voranstehend beschriebenen Nachteile nicht oder zumindest in geringerem Maße aufweisen, und insbesondere in einfacher und kostengünstiger Weise das Aufrauen einer Bohrlochoberfläche ermöglichen.

Die voranstehend beschriebene technische Problemstellung wird durch ein Werkzeug zum Aufrauen einer Bohrlochoberfläche gelöst, mit einem Kopplungsabschnitt zum Einspannen des Werkzeugs in ein Bohrgerät und einem Werkzeugkopf zur Bearbeitung der Bohrlochoberfläche, wobei der Werkzeugkopf eine äußere Mantelfläche aufweist, auf der Schneidmittel angeordnet sind, die von der Mantelfläche seitlich abstehen. Die äußere Mantelfläche weist entlang einer Werkzeuglängsrichtung eine Balligkeit auf, dies bedeutet, dass die äußere Umfangsfläche des Werkzeugkopfes ballig ausgebildet ist, so dass der Werkzeugkopf in seinem in Werkzeuglängsrichtung mittleren Bereich einen größeren Durchmesser als in seinem in Werkzeuglängsrichtung äußeren Bereichen an den beiden werkzeuglängsseitigen Enden des Werkzeugkopfes hat.

Durch die ballige Ausführung der Mantelfläche wird während des Aufrauvorgangs eine gleichmäßige Bearbeitung der Bohrlochoberfläche begünstigt. So kann ein Anwender den Werkzeugkopf in ein zu bearbeitendes Bohrloch einführen und der durch das Bohrgerät erzeugten Werkzeugrotation manuell eine Schwenk- bzw. Rührbewegung überlagern. Dabei kann die ballige Außenkontur des Werkzeugkopfs als Führungsfläche für eine Schwenkbewegung des Anwenders dienen. Beispielsweise kann das Werkzeug aus einer ersten Winkellage durch ein entlang der Werkzeuglängsrichtung erfolgendes Abwälzen des balligen Werkzeugkopfs auf der Bohrlochoberfläche in eine zweite Winkellage bewegt werden. Ein Wechsel zwischen zwei Winkellagen bedeutet hier das relative Verschwenken der Werkzeuglängsachse zu einer Längs- bzw. Mittenachse der Bohrung.

Gemäß einer Ausführungsform des Werkzeugs weist die Mantelfläche einen maximalen Durchmesser auf, der bezüglich einer Längserstreckung des Werkzeugkopfs mittig angeordnet ist. Auf diese Weise wird eine gleichmäßige Werkzeugführung des Anwenders beim Verschwenken des Werkzeugs begünstigt. So kann die Balligkeit der Mantelfläche ausgehend von einem maximalen Durchmesser insbesondere symmetrisch gestaltet sein und die Außenkontur in einem Querschnitt entlang der Werkzeuglängsachse beispielsweise ein Kreisbogensegment beschreiben.

Die Schneidmittel des Werkzeugs können Stifte aus einem Schneidwerkstoff, insbesondere Hartmetall oder Diamant, umfassen, wobei die Stifte umfangsseitig unter einem Winkelabstand verteilt angeordnet sind. Mithilfe der Stifte lässt sich ein definiertes Einbringen von Hinterschnitten in die Bohrlochoberfläche erreichen. Zudem kann eine insbesondere unter einem konstanten Winkelabstand vorgesehene umfangsseitige Anordnung der Stifte die Führung des Werkzeugs während des Aufrauvorgangs verbessern.

So können die Stifte bezüglich einer Werkzeuglängsachse unter einem Winkelabstand angeordnet sein, wobei der Winkelabstand 30° bis 180°, bevorzugt 60° bis 150°, weiter bevorzugt 120° beträgt. Beispielsweise können wenigstens drei Stifte unter einem Winkelabstand von 120° verteilt auf der äußeren Mantelfläche des Werkzeugkopfs angeordnet sein. Damit kann der Verschleiß des Werkzeugkopfs reduziert werden, da der Kontakt des Werkzeugkopfs zur Bohrlochoberfläche maßgeblich durch die Stifte gebildet wird und in der Folge ein Verschleiß der die Stifte tragenden, äußeren Mantelfläche verringert wird.

Gemäß einer weiteren Ausgestaltung des Werkzeugs ist der maximale Durchmesser des Werkzeugkopfs kleiner als der Nenndurchmesser eines zu bearbeitenden Bohrlochs. Der maximale Durchmesser des Werkzeugkopfs kann beispielsweise durch auf der balligen Mantelfläche angeordnete Hartmetallstifte definiert sein, die einen Hüllkreis beschreiben, dessen Durchmesser kleiner ist als der Nenndurchmesser des zu bearbeitenden Bohrlochs. Diese Gestaltung erlaubt ein einfaches Einführen des Werkzeugkopfs in das zu bearbeitenden Bohrloch und begünstigt zudem eine Schwenk- bzw. Rührbewegung des Anwenders, da in radialer Richtung ein Spiel zwischen dem Werkzeugkopf und der Bohrlochoberfläche gebildet ist.

Der Kopplungsabschnitt ist nach einer Weiterbildung des Werkzeugs an einem ersten Ende eines Werkzeugschafts und der Werkzeugkopf an einem entgegengesetzten, zweiten Ende des Werkzeugschafts angeordnet, wobei der Werkzeugschaft einen geringeren Durchmesser aufweist als der Werkzeugkopf. Der Werkzeugschaft ist folglich in radialer Richtung relativ zu dem Werkzeugkopf abgesetzt. Zwischen dem Werkzeugschaft und der Bohrlochoberfläche ist daher ein Spiel gebildet, sodass ein Freiraum für den Anwender zur Werkzeugführung geschaffen wird.

Der Werkzeugschaft weist nach einer Weiterbildung des Werkzeugs in axialer Richtung wenigstens die Länge des Werkzeugkopfs auf. Das Werkzeug ist daher auch zur Bearbeitung von Bohrlöchern im Bereich des Bohrlochgrunds geeignet, wobei die Bohrlochtiefe dem Zweifachen der axialen Länge des Werkzeugkopfs entspricht.

Die axiale Länge des Werkzeugkopfs entspricht bevorzugt dem Neunfachen des maximalen Werkzeugkopfdurchmessers, wobei die Länge auch davon abweichen kann, d.h. kleiner oder größer sein kann. Mit einem solchen Werkzeug kann sichergestellt werden, dass der aufgeraute Bereich der Bohrlochoberfläche sich in axialer Richtung über eine ausreichende Länge erstreckt. Insbesondere bei Sacklochbohrungen kann trotz sich im Bereich des Bohrlochgrunds ansammelnden Bohrstaubs auf ein Ausblasen bzw. Reinigen des Bohrlochs verzichtet werden, da eine ausreichend große Raufläche zur Verfügung steht. Bevorzugt kann der Werkzeugkopf über seiner gesamten axialen Länge verteilt mit Hartmetall- oder Diamantstiften bestückt sein.

Gemäß einer weiteren Ausgestaltung des Werkzeugs entspricht die axiale Länge des Werkzeugkopfs dem Neunfachen des Nenndurchmessers einer zu bearbeitenden Bohrung, wobei die Länge auch davon abweichen kann, d.h. kleiner oder größer sein kann. Mit einem solchen Werkzeug wird sichergestellt, dass sich der aufgeraute Bereich der Bohrlochoberfläche in axialer Richtung über eine ausreichende Länge erstreckt. Insbesondere bei Sacklochbohrungen kann trotz sich im Bereich des Bohrlochgrunds ansammelnden Bohrstaubs auf ein Ausblasen bzw. Reinigen des Bohrlochs verzichtet werden, da eine ausreichend große Raufläche zur Verfügung steht. Bevorzugt kann der Werkzeugkopf über der gesamten axialen Länge verteilt mit Hartmetall- oder Diamantstiften bestückt sein.

Der größte Durchmesser des Werkzeugkopfs sollte um wenigstens 30 % größer als der Durchmesser eines den Werkzeugkopf und den Kopplungsabschnitt verbindenden Werkzeugschafts sein.

Nachfolgend wird die Erfindung anhand einer Ausführungsbeispiele darstellenden Zeichnung näher beschrieben. Es zeigen jeweils schematisch:
- Fig. 1 eine erste Ausgestaltung eines erfindungsgemäßes Werkzeugs in einer perspektivischen Ansicht, einer Frontansicht und einer Seitenansicht; und
- Fig. 2 eine zweite Ausgestaltung eines erfindungsgemäßes Werkzeugs in einer perspektivischen Ansicht, einer Frontansicht und zwei Seitenansichten.

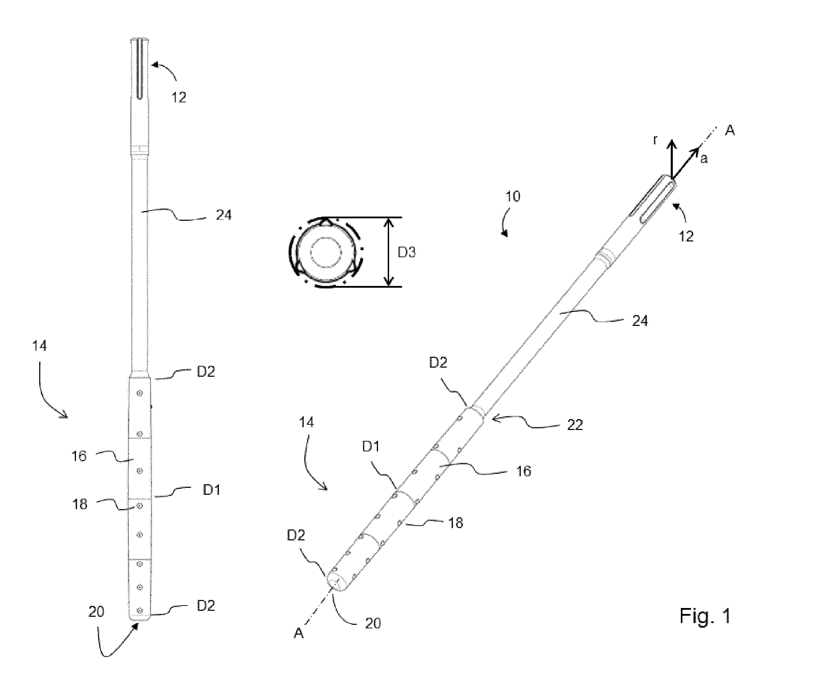

Figur 1 zeigt ein Werkzeug 10 zum Aufrauen einer Bohrlochoberfläche (nicht dargestellt) in einer perspektivischen Ansicht, einer Frontansicht und einer Seitenansicht. Das Werkzeug 10 hat einen Kopplungsabschnitt 12 zum Einspannen des Werkzeugs 10 in ein Bohrgerät (nicht dargestellt) und einen Werkzeugkopf 14 zur Bearbeitung einer Bohrlochoberfläche.

Der Werkzeugkopf 14 weist eine äußere Mantelfläche 16 auf. Auf der äußeren Mantelfläche 16 sind Schneidmittel 18 angeordnet, die radial gegenüber der Mantelfläche 16 vorstehen. Die äußere Mantelfläche 16 weist entlang einer Werkzeuglängsrichtung a eine Balligkeit auf, die in Seitenansicht zu erkennen ist.

Die Mantelfläche 16 hat einen maximalen Durchmesser D1, der bezüglich der Längserstreckung des Werkzeugkopfs 14 mittig angeordnet ist. Ausgehend von dem maximalen Durchmesser D1 ist die Mantelfläche 16 in Richtung eines stirnseitigen Endes 20 und eines entgegengesetzten schaftseitigen Endes 22 jeweils auf einen im Vergleich zum Durchmesser D1 kleineren, minimalen Durchmesser D2 verjüngt. Mit anderen Worten ist die äußere Mantelfläche in Seitenansicht in einer radialen Richtung r nach außen gewölbt.

Die auf der Mantelfläche 16 vorgesehenen Schneidmittel umfassen Hartmetallstifte 18, die umfangsseitig unter einem Winkelabstand von 120° und zudem axial entlang der Werkzeuglängsachse A verteilt angeordnet sind.

Die axiale Längserstreckung des Werkzeugkopfs 14 ist größer als das Neunfache des maximalen Durchmessers D3 des Werkzeugkopfs. Der maximale Durchmesser D3 des Werkzeugkopfs 14 wird durch den Durchmesser der Hüllkreise der Hartmetallstifte 18 bestimmt, die im Bereich des maximalen Durchmessers D1 der Mantelfläche angeordnet sind.

Gemäß alternativen Ausgestaltungen der Erfindung ist die axiale Längserstreckung des Werkzeugkopfs größer als das Neunfache des Nenndurchmessers der zu bearbeitenden Bohrung.

Der Kopplungsabschnitt 12 ist an einem ersten Ende eines Werkzeugschafts 24 und der Werkzeugkopf 14 an einem entgegengesetzten, zweiten Ende des Werkzeugschafts 24 angeordnet. Der Werkzeugschaft 24 weist einen geringeren Durchmesser auf als der Werkzeugkopf 14. Die axiale Länge des Werkzeugschafts 24 entspricht im Wesentlichen der axialen Länge des Werkzeugkopfs 14.

Zum Aufrauen einer Bohrlochoberfläche (nicht dargestellt) wird das erfindungsgemäße Werkzeug 10 in ein Bohrgerät (nicht dargestellt) eingespannt. Das Werkzeug 10 wird mit dem Werkzeugkopf in ein Bohrloch (nicht dargestellt) eingeführt. Der Nenndurchmesser des Bohrlochs ist dabei bevorzugt größer als der maximale Durchmesser D3 des Werkzeugkopfs 14. Das Bohrgerät bewirkt eine Rotation des Werkzeugs 10 wobei dieser Rotation durch den Anwender eine Schwenk- bzw. Rührbewegung überlagert wird. Der ballige Werkzeugkopf 14 wird durch den Anwender entlang der Bohrlochoberfläche geführt, sodass die Führung des Werkzeugs 10 durch die Form des Werkzeugkopfs 14 vorgegeben wird. Auf diese Weise kann ein gleichmäßiges Aufrauen der Bohrlochoberfläche erreicht werden. Durch die umfangsseitige Verteilung der Hartmetallstifte 18 wird zudem der Verschleiß des Werkzeugs 10 im Bereich der äußeren Mantelfläche 16, insbesondere auf der Höhe des maximalen Durchmessers D1, reduziert.

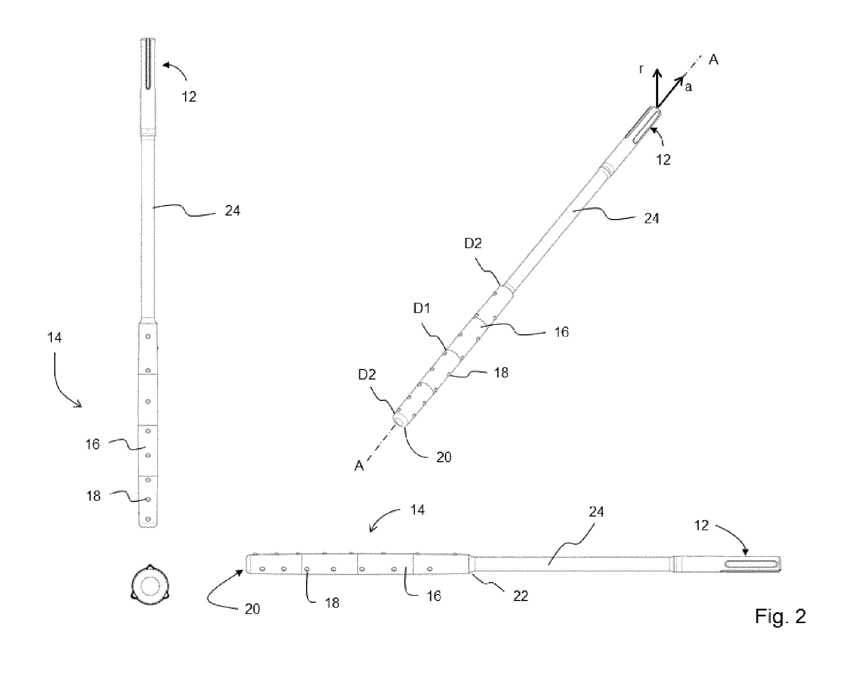

Figur 2 zeigt eine weitere Ausgestaltung eines Werkzeugs 10, wobei sich diese alternative Ausgestaltung durch eine geänderte Formgebung des Kopplungsabschnitts 12 auszeichnet, der im Durchmesser größer als der Schaftdurchmesser ist.

Das Werkzeug ist so ausgeführt, dass der Werkzeugkopf einen größten Durchmesser hat, der um mindestens 30 % größer ist als der Durchmesser des Werkzeugschafts.

## Patentansprüche

1. Werkzeug zum Aufrauen einer Bohrlochoberfläche, mit einem Kopplungsabschnitt (12) zum Einspannen des Werkzeugs (10) in ein Bohrgerät und einem Werkzeugkopf (14) zur Bearbeitung der Bohrlochoberfläche, wobei der Werkzeugkopf (14) eine äußere Mantelfläche (16) aufweist, auf der Schneidmittel (18) angeordnet sind, die von der Mantelfläche (16) seitlich abstehen, **dadurch gekennzeichnet, dass** die äußere Mantelfläche (18) entlang einer Werkzeuglängsrichtung (a) eine Balligkeit aufweist.

2. Werkzeug nach Anspruch 1, **dadurch gekennzeichnet, dass** die Mantelfläche (16) einen maximalen Durchmesser (D1) aufweist, der bezüglich einer Längserstreckung des Werkzeugkopfs (14) im Wesentlichen mittig angeordnet ist.

3. Werkzeug nach einem der Ansprüche 1 oder 2, **dadurch gekennzeichnet, dass** die Schneidmittel (18) Stifte aus einem Schneidwerkstoff, insbesondere Hartmetall oder Diamant, umfassen, wobei die Stifte umfangsseitig unter einem Winkelabstand verteilt angeordnet sind.

4. Werkzeug nach Anspruch 3, **dadurch gekennzeichnet, dass** die Stifte bezüglich einer Werkzeuglängsachse (A) unter einem Winkelabstand angeordnet sind, wobei der Winkelabstand 30° bis 180°, bevorzugt 60° bis 150°, weiter bevorzugt 120° beträgt.

5. Werkzeug nach einem der Ansprüche 1 bis 4, **dadurch gekennzeichnet, dass** der maximale Durchmesser (D3) des Werkzeugkopfs (14) kleiner ist, als der Nenndurchmesser eines zu bearbeitenden Bohrlochs.

6. Werkzeug nach einem der Ansprüche 1 bis 5, **dadurch gekennzeichnet, dass** der Kopplungsabschnitt (12) an einem ersten Ende eines Werkzeugschafts (24) und der Werkzeugkopf (14) an einem entgegengesetzten, zweiten Ende des Werkzeugschafts (24) angeordnet ist, wobei der Werkzeugschaft (24) einen geringeren Durchmesser aufweist als der Werkzeugkopf (14).

7. Werkzeug nach Anspruch 6, **dadurch gekennzeichnet, dass** der Werkzeugschaft (24) in axialer Richtung (a) wenigstens die Länge des Werkzeugkopfs (14) aufweist.

8. Werkzeug nach einem der Ansprüche 1 bis 7, **dadurch gekennzeichnet, dass** die axiale Länge des Werkzeugkopfs (14) etwa dem Neunfachen des maximalen Werkzeugkopfdurchmessers (D3) entspricht.

9. Werkzeug nach einem der Ansprüche 1 bis 8, **dadurch gekennzeichnet, dass** die axiale Länge des Werkzeugkopfs (D3) etwa dem Neunfachen des Nenndurchmessers einer zu bearbeitenden Bohrung entspricht.

10. Werkzeug nach einem der Ansprüche 1 bis 9, **dadurch gekennzeichnet, dass** der größte Durchmesser des Werkzeugkopfs (14) um wenigstens 30 % größer als der Durchmesser eines Werkzeugkopf (14) und Kopplungsabschnitt (12) verbindenden Werkzeugschafts (24) ist.
